# DEMANDE DE BREVET EUROPEEN

(11) **EP 1 253 553 A2**
(43) Date de publication de la demande: **30.10.2002**
(21) Numéro de dépôt: 01402979.7
(22) Date de dépôt: 21.11.2001
(51) Int. Cl.: G06N 5/02

(54) **Procédé et système de conception interactive d'une base de connaissance libre d'ambiguités**

(30) Priorité: 21.11.2000 FR 0014999
(71) Demandeur: FIDAL - Fiduciaire Juridique et Fiscale de France, 92309 Levallois Perret (FR)
(72) Inventeur: Arnaud, Chantal, FIDAL, 92309 Levallois Perret (FR); Berger, Pierre, FIDAL, 92309 Levallois Perret (FR); Ferrier, Didier, 34170 Castelnau (FR); Sallantin, Jean, 34070 Montpellier (FR); Barboux, Cécile, 34230 Le Pouget (FR)
(74) Mandataire: Bloch, Gérard

(57) **Abrégé**

Selon le procédé, on saisit une base de connaissances (A) comportant des ambiguïtés, on saisit un ensemble (B) de catégories mathématiques sous forme de fragments cohérents d'un langage de programmation fonctionnel, on fait interagir la base (10) et l'ensemble (13) pour spécifier les composantes d'un code source de programmation, extraire les ambiguïtés de la base et obtenir une base (14) libre d'ambiguïtés.

Le procédé est mis en oeuvre avec au moins un ordinateur, des moyens logiciels informatiques de saisie de la base (10), des moyens logiciels informatiques de calcul (13) pour, sous la commande d'au moins un opérateur, coopérer avec les moyens de saisie et éliminer les ambiguïtés de la base de connaissances.

## Description

L'invention concerne un procédé et un système informatiques d'assistance à la conception interactive d'applications transactionnelles, ou d'accords, vérifiant la cohérence de spécifications ou définitions énoncées par des formules mathématiques et fondé sur la théorie mathématique des catégories.

Plus précisément, l'invention concerne tout d'abord un procédé de conception interactive d'une base de connaissances libre d'ambiguïtés, dans lequel on crée deux sous-ensembles matriciels de connaissances (A) et de calcul (B), respectivement, pour former un cadre matriciel de calcul, de lignes et de colonnes d'éléments structurels, on lie les éléments structurels en ligne des deux sous-ensembles matriciels par des adéquations et, pour faire évoluer le sous-ensemble matriciel de connaissances et le rendre libre d'ambiguïté, on déduit de façon interactive des éléments d'une colonne d'un (B; A) des sous-ensembles matriciels d'éléments de la même colonne de l'autre (A; B) des sous-ensembles matriciels, les éléments du sous-ensemble matriciel (A; B) desquels on déduit les éléments de l'autre sous-ensemble matriciel (B; A) étant liés à des éléments déduits de ceux dudit autre sous-ensemble matriciel (B; A).

L'invention concerne également un système informatique de conception interactive d'une base de connaissances libre d'ambiguïtés, comprenant au moins un ordinateur, des moyens logiciels informatiques de saisie d'une base de connaissances, des moyens logiciels informatiques de calcul agencés pour, sous la commande d'au moins un opérateur, coopérer avec les moyens logiciels de saisie et éliminer les ambiguïtés de la base de connaissances.

L'invention concerne aussi un outil informatique intermédiaire pour la mise en oeuvre du système informatique de conception interactive d'une base de connaissances libre d'ambiguïtés, comprenant le produit de logiciel informatique contenant un cadre matriciel de calcul avec un sous-ensemble matriciel de connaissances (A) et un sous-ensemble matriciel de calcul (B) agencés pour interagir entre eux et tous deux à entrée de commande d'interactivité.

Une des originalités de cette invention réside dans le fait qu'elle a été fondée sur les objets formels mathématiques qui définissent les langages de programmation que sont les monades.

Une monade est le résultat d'une composition de deux foncteurs, un premier qui agit sur une première catégorie structurelle A pour la transporter dans une deuxième catégorie B ou A, un deuxième, qui agit sur B pour la renvoyer dans la catégorie A.

Une catégorie mathématique est un ensemble cohérent d'éléments structurels et de flèches qui les lient.

Pour revenir au système de l'invention, son originalité réside donc dans le fait que tous ses éléments structurels sont des fragments cohérents d'un langage de programmation fonctionnel.

Comme exemple, on peut considérer l'établissement d'un menu dans un restaurant au vu de la carte du restaurateur et avec son aide qui procède bien, pour un client, d'une transaction interactive. Celle-ci est fondée sur la monade suivante :
- une catégorie de faits, originaires du client et du restaurateur, à relier à
- une catégorie de lois ou de contraintes édictées par le restaurateur et le client.

### Etablissement interactif d'un menu dans un restaurant

Le restaurateur peut proposer :
- diverses formules de repas pouvant comprendre, autour
   . d'un plat principal,
   . une entrée (charcuterie, crudités, cocktail),
   . un fromage,
   . un dessert.

L'établissement du menu consiste à appliquer de manière cohérente aux termes ci-dessus les contraintes, a) celles imposées par le restaurateur, b) celles imposées par le client.
a) La première contrainte, s'agissant d'un restaurant, est que le client choisisse au moins un plat. Il serait incohérent qu'un individu se mette à table sans rien commander.
   Si le restaurateur propose une formule « pas cher », le choix du client de prendre un fromage et un dessert constitue une incohérence à laquelle est donc associée la contrainte, pour le client, de ne choisir que l'un des deux.
   On peut multiplier les exemples et créer ainsi le monde ici des menus de restauration, décrit par les termes et les relations qui les lient, qu'on appelle une ontologie.
b) Quand un client veut commander des crudités, une charcuterie et un fromage, sans plat principal, chez le restaurateur qui l'exige, il y a incohérence.

Il en résulte qu'il faut tenir compte d'une conjonction de faits émanant des parties pouvant être en présence, par une phase préalable d'initialisation et d'apprentissage, c'est-à-dire créer une ontologie de départ ou, comme désignée plus loin, une base de connaissances. A cet effet, on intègre des exemples prédéterminés et réels, dont on extrait éventuellement des régularités communes, c'est-à-dire des faits communs, forts, obligés.

Puis on enrichit régulièrement cette ontologie ou base de connaissances.

Des exemples des clients, regroupés par conjonctions et disjonctions, on tire des hypothèses, des conjonctions de faits, qui, inversement, sont donc illustrés par ces exemples.

Des hypothèses, on tire des contraintes procédurales, des principes.

Du côté du restaurateur, il crée à l'aide des exemples des clients un réseau sémantique appelé concept, duquel il dégage des postulats, qui sont des contraintes qu'il peut imposer aux clients puisque vérifiées par le concept, auxquels il ajoute des lois, qui sont des contraintes directes sur les faits des clients. Une telle loi, par exemple, est l'obligation de manger quelque chose.

On notera que pour la mise en oeuvre de l'outil de l'invention, on a cherché à simplifier le dialogue homme-machine ; on a ainsi voulu réduire le nombre des "clics de souris" et, pour cela, limiter les hypothèses. L'outil peut proposer ainsi des régularités (lemmes), du type :
en cas d'entrée et de fromage, il n'y a pas de dessert, et on les sélectionne ou non comme exemples. On évitera toutefois, dans les exemples, une trop grande redondance des régularités et on veillera à ce qu'ils soient bien équilibrés. De même, le restaurateur, après avoir relevé des régularités dans le choix des clients, pourra en sélectionner certaines et les valider pour faire évoluer l'ontologie. A un principe comme « un repas à entrée systématique », on peut opposer l'opinion d'exclure le principe.

Bref, l'interactivité de la conception permise par l'outil informatique de l'invention est parfaitement conviviale.

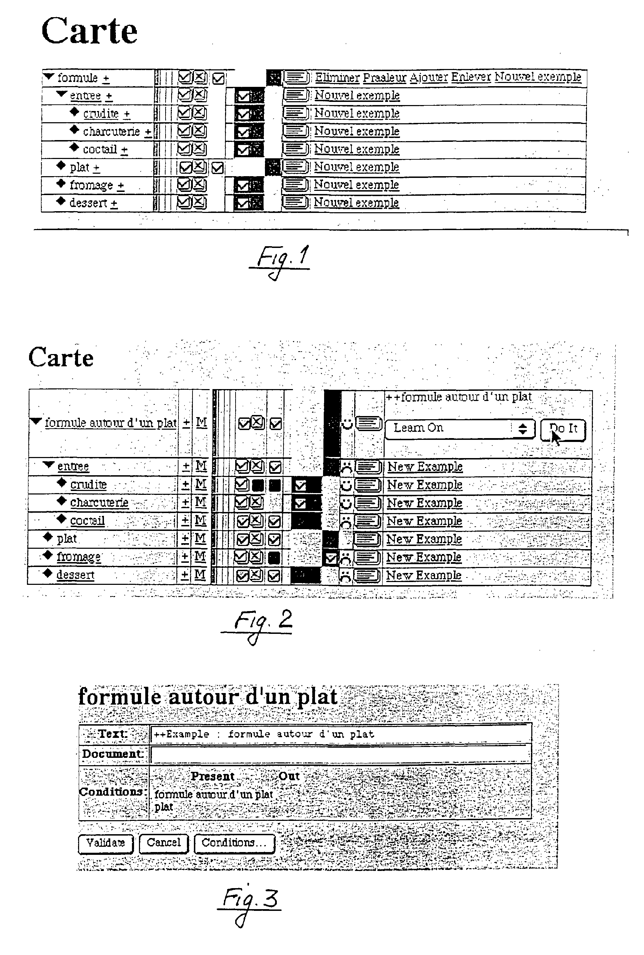

Apprécions maintenant l'interactivité de l'outil informatique de l'invention en suivant les actions d'un client sur cet outil, en référence aux images de l'écran de son ordinateur des figures 1-9.

L'écran de la figure 1 illustre un FAIT.

En cliquant ligne "plat", première colonne de gauche de la grille, le client choisit un plat que le système enregistre en affichant l'icone ligne "plat", troisième colonne de gauche.

En outre, la "formule autour d'un plat" étant un exemple de l'ontologie, le système le signale en affichant l'icone ligne "formule", troisième colonne de gauche.

L'écran de la figure 2 illustre une HYPOTHESE.

L'hypothèse est faite par le client dans la carte. Elle est vue par le système comme un exemple positif de "formule autour d'un plat", par affichage sur la grille des icones ligne "formule autour d'un plat", première et troisième colonnes et de l'expression "++ formule autour d'un plat".

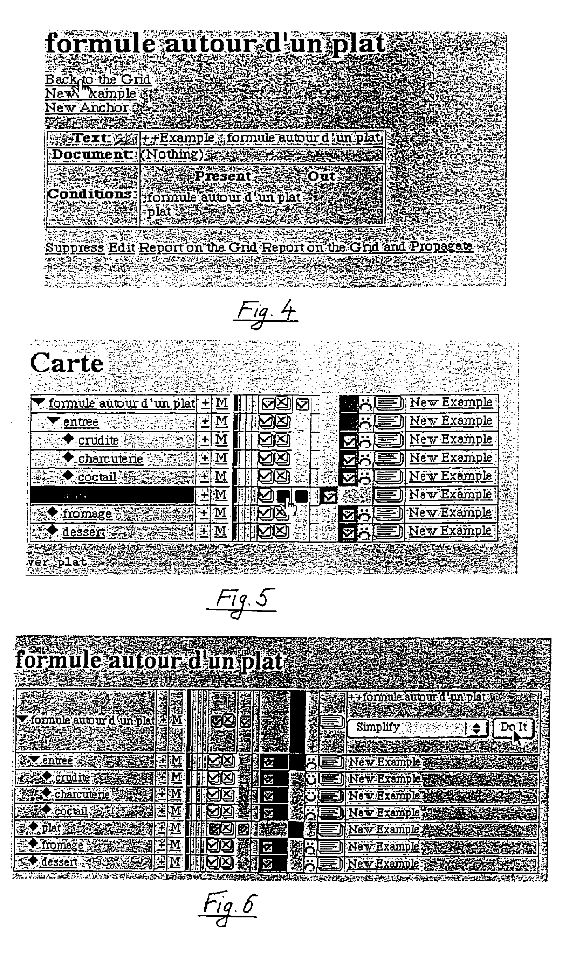

L'écran de la figure 3 illustre la construction d'un EXEMPLE D'UN CONCEPT, celui de la formule autour d'un plat. Apparaissent à l'écran le choix d'un plat et celui de l'expression "formule autour d'un plat". L'exemple est alors un exemple positif.

L'écran de la figure 4 illustre l'introduction d'un exemple dans l'ontologie du système.

Le client peut supprimer un exemple, l'enregistrer, le reporter sur la grille de l'écran.

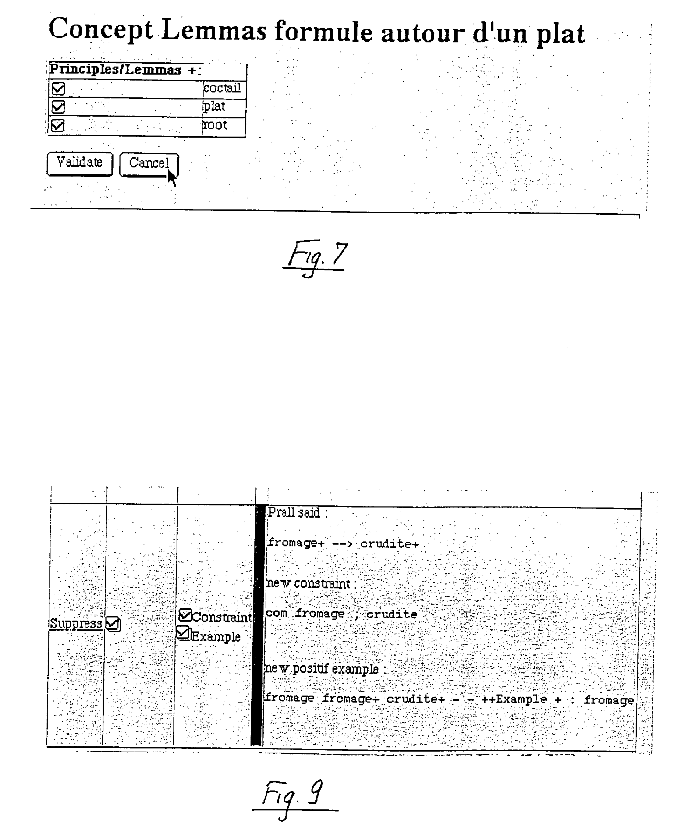

L'écran de la figure 5 illustre un PARADOXE SUR UN FAIT.

Si le client choisit de ne pas prendre de plat en cliquant ligne "plat", deuxième colonne de la grille, il crée un paradoxe, ou une incohérence, dans le cadre de la formule autour d'un plat (icones de la ligne "formule autour d'un plat" et des première et troisième colonnes de la grille). Ce paradoxe, de la contrainte violée de l'obligation de prendre un plat, s'exprime par l'affichage de l'expression "ver plat".

L'écran de la figure 6 illustre la création de PRINCIPES.

Toujours dans le cadre de la formule autour d'un plat, l'opération visant à simplifier, en cliquant la zone pointée par la flèche, va créer un principe qui doit être vérifié par tous les exemples de formule autour d'un plat.

L'écran de la figure 7 illustre le refus de tout PRINCIPE induit par les choix du client.

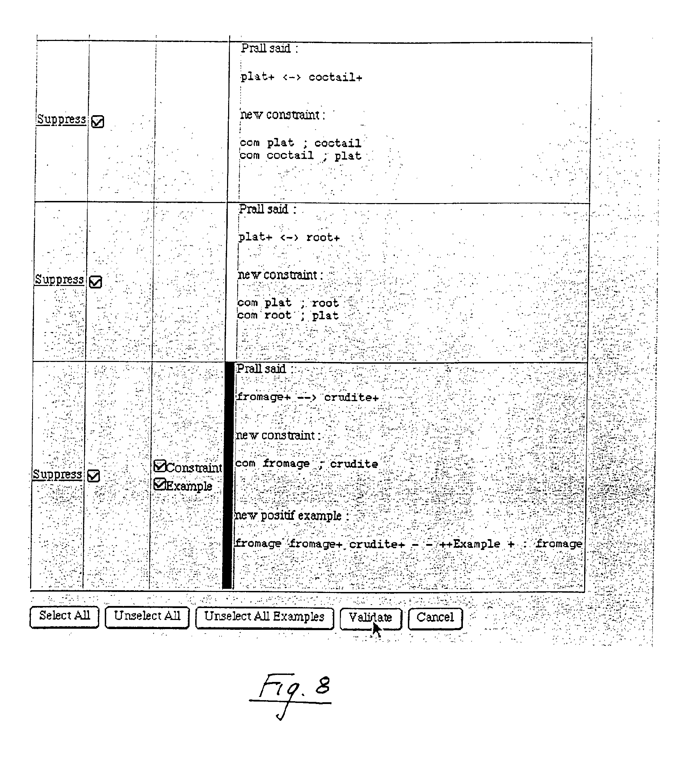

L'écran de la figure 8 illustre l'apprentissage des LEMMES sur les exemples de formule autour d'un plat.

L'écran de la figure 9 illustre une CONJECTURE.

Un nouvel exemple positif est trouvé par le système : si le client prend du fromage, il prend des crudités. Cet exemple est ici présenté comme le prototype d'une conjecture sur les choix du client.

Comme autre transaction interactive, on citera aujourd'hui bien entendu une transaction commerciale électronique (le e-commerce) qui est une transaction, ou un échange contradictoire, entre deux agents. Au même titre, la rédaction d'un contrat entre deux conseils, juristes ou avocats procède de la même théorie mathématique des catégories. Il en est de même de l'audit des contrats ou de l'élaboration des demandes de brevet d'invention, par exemple.

Il s'agit toujours de soulever des oppositions entre des catégories de raisonnement afin d'assister le contrôle des utilisateurs sur les documents engendrés. A partir d'une base de connaissances établie par un groupe d'experts, l'outil va dégager de manière systématique les incohérences qui vont forcer la révision des connaissances.

L'outil de l'invention est d'une assistance efficace dans la construction de cadres de conception de contrats. Il organise des interactions pour construire la base de connaissance évoquée ci-dessus qui est logiquement consistante et qui va canaliser l'activité d'élaboration du contrat puis chaque protagoniste exercera sa capacité de jugement critique sur le fruit du raisonnement de son interlocuteur. Du point de vue informatique, le travail de construction est réalisé par des experts du domaine, juniors et seniors, mais sans l'intervention d'ingénieurs cogniticiens, avec, comme équipements,
- un propagateur de contraintes,
- un gestionnaire de hiérarchie de termes,
- un générateur de documents.

Les experts élaborent des raisonnements s'appuyant sur les catégories particulières, déjà plus ou moins évoquées ci-dessus à propos des menus de restauration :
- des objets : les contrats déjà rédigés,
- une discussion faisant intervenir des notions comme le concept de franchise, durée, personne morale,
- des exemples de trames de contrats classés par ressemblances,
- des lexies présentes dans les contrats,
- des clauses exprimant des régularités,
- des conjectures donnant l'ensemble des contraintes fondatrices d'une classe de contrats,
- une notion de preuve et de réfutation par des contrats volontairement présentés comme des objets aberrants.

En résumé, ces catégories doivent : 1) être capables de représenter des réalisations particulières, ici des contrats ; 2) elles doivent s'articuler entre elles, en particulier elles doivent permettre de formuler des oppositions ; 3) une fois articulées entre elles, elles doivent permettre à l'expert de former un système déductif susceptible de représenter la réalisation qui l'intéresse.

L'outil va guider la réalisation d'une représentation des connaissances en se fondant sur des contradictions, incohérences ou ambiguïtés, entre des types de raisonnement.

On a représenté ci-dessous le tableau des contradictions qui peuvent apparaître entre des types de raisonnement lors de la recherche d'une bonne formulation du problème. On notera que ce tableau a une portée parfaitement générale et qu'il s'applique à tout type de transaction interactive, comme déjà abordé pour l'établissement d'un menu de restauration.

| **Tableau des contradictions** | | | |
|---|---|---|---|
| Portée des contradictions | Types de raisonnement | Exemples de contradiction | Types de raisonnement |
| *Particularité* | **Exemples** Raisonnement par classification | Concept sans exemples Classes d'exemples sans concept pour les désigner | **Concept** Exemple et raisonnement par cas |
| *Possibilité* | **Hypothèses** Raisonnement par inférence | Postulat prémisses ou conséquences d'aucune règle Hypothèses provoquant des postulats incohérents | **Postulat** Postulat et raisonnement logique |
| *Convention* | **Fait** Hiérarchie de termes | Incohérence d'un fait provoquée par les lois | **Loi** Contraintes sur des termes |
| *Procédure* | **Principe** Programmation logique | Opinion opposée à un principe | **Opinion** |
| *Nécessité* | **Lemme** | Incohérence d'une démonstration | **Conjecture** |
| *Universalité* | **Preuve** | Preuve et réfutation | **Objet** |

Ce tableau appelle les commentaires suviants :
- Un concept sans exemple tout autant qu'une classification créant des regroupements d'exemples qui ne sont pas désignés par un concept provoque une question sur la généralité d'un concept ou celle d'un concept nouveau.
- Une règle qui provoque une inconsistance sur la description d'un postulat provoque une question sur la possibilité de ce postulat.
- Une loi est une convention que valident ou invalident des fait.
- Une opinion va justifier un comportement qui va confirmer ou infirmer un principe.
- Un lemme ou une régularité non vérifiés vont s'opposer à la possibilité d'une conjecture ;
- Un objet monstrueux va s'opposer à l'universalité d'une preuve.

Le procédé de l'invention met en oeuvre les moyens de tirer parti des contradictions. Si une contradiction signale une incohérence, alors le procédé propose des stratégies de révision du raisonnement pour éliminer l'incohérence.

Dans le cas particulier du domaine juridique, la demanderesse a mis en oeuvre les phases de construction d'hypothèses, de lemmes, de conjecture et de preuve. Les experts peuvent, en jouant sur l'apprentissage, faire varier les hypothèses et adapter une classe de contrats à un domaine spécifique.
- Les faits sont représentés par une hiérarchie de termes.
- Les hypothèses sont représentées par des conjonctions de faits.
- Les exemples comme les contre-exemples sont des hypothèses correctes ou non.
- Un postulat exprime la définition d'un concept.
- Les concepts sont représentés par des exemples.
- A partir d'exemples, l'outil de l'invention apprend des hypothèses et en dégage des lemmes qui sont un ensemble minimal d'expressions assemblant des faits pour discerner les exemples.
- A partir de conjonctions de lemmes, l'outil produit une preuve ici selon la méthode appelée treillis de Galois.
- Une conjecture est choisie par l'expert en relation avec les exemples d'un lemme.
- Un objet monstrueux vérifie la conjecture et il contredit la preuve.
- Un principe fonde les lemmes, il vient des hypothèses et il est confronté à l'opinion de l'expert.

Pour poursuivre l'exemple juridique, en s'appuyant sur l'opinion juridique de l'expert, les jeunes juristes formulent une conjecture qui produit des objets monstrueux présentés sous la forme de contrats. Ces objets sont paradoxaux relativement à une preuve réalisée avec des lemmes fondés sur des principes.

Le paradoxe entre les objets et la preuve va se reporter potentiellement sur les relations entre la conjecture proposée par les jeunes juristes et les lemmes venant de l'application des principes et sur les relations entre les opinions de l'expert et leurs conflits potentiels avec les principes en vigueur dans le domaine juridique considéré.

Pour mettre en oeuvre la construction informatique d'un cadre de transaction, on a besoin de deux types de logiciel :
- un logiciel d'apprentissage de règles logiques à partir d'exemples exprimant des objets structurés,
- un logiciel de propagation de contraintes booléennes pour rechercher des contradictions.

Le procédé, à partir d'entrées constituées de contraintes de transcription entre des catégories de raisonnements, produit, en sortie, des contradictions entre des catégories de raisonnements.
- Les rationalités expriment des contraintes de transcriptions entre types de raisonnement.
- Les adéquations expriment différentes relations imposées entre les entrées et les sorties.
- L'adéquation heuristique porte sur l'adéquation des procédures et des conventions de calcul.
- L'adéquation épistémique porte sur la consistance d'un raisonnement déductif.
- L'adéquation ontologique porte sur la cohérence de l'univers du discours (voir le tableau précédent).

| **Tableau des adéquations** | | |
|---|---|---|
| ***Entrée*** | ***adéquation*** | ***Sortie*** |
| Contraintes de rationalité | *ontologique* | Identification des ambiguïtés entre |
| Des correspondances entre : | Examen de l'univers du discours | *Hypothèses et postulats* sur les transactions |
| . preuve et conjecture | | *Concepts et exemples* de transaction |
| . exemple et hypothèse | | |
| . lemme et objet | | |
| . postulat et concept | | |
| | *heuristique* | |
| Des correspondances entre : | Conventions et procédures | *Opinions et principes* du domaine de transaction |
| - fait et lemme | | *Lois et faits* sur le domaine de transaction |
| - principe et hypothèse | | |
| - conjecture et lois | | |
| - postulat et opinion | | |
| | *épistémique* | |
| Des correspondances entre : | Consistance de la théorie construite | *Lemme et conjectures* sur les transactions |
| - lemmes et exemples | | *Objets et preuves sur les transactions* |
| - hypothèse et preuve | | |
| - concepts et conjectures | | |

Le procédé permet ainsi de donner une base formelle aux spécifications des applications transactionnelles :
- des spécifications fonctionnelles : des ensembles de relations implicites ou explicites entre les entrées, les sorties et l'état interne d'information.
- des propriétés - les rationalités -, que doit vérifier le système, sont mises en correspondance avec les spécifications fonctionnelles.
- des estimateurs de performances, - les adéquations -, en termes de coût, confiance, rapidité, taille, constituent un ensemble d'équations faisant intervenir des entrées et des sorties.
- des contraintes sur les indices de performances.

Des tableaux des contradictions et des adéquations, on tirera un tableau aéré qui est en fait le coeur de l'invention et qu'on appellera cadre matriciel de calcul.

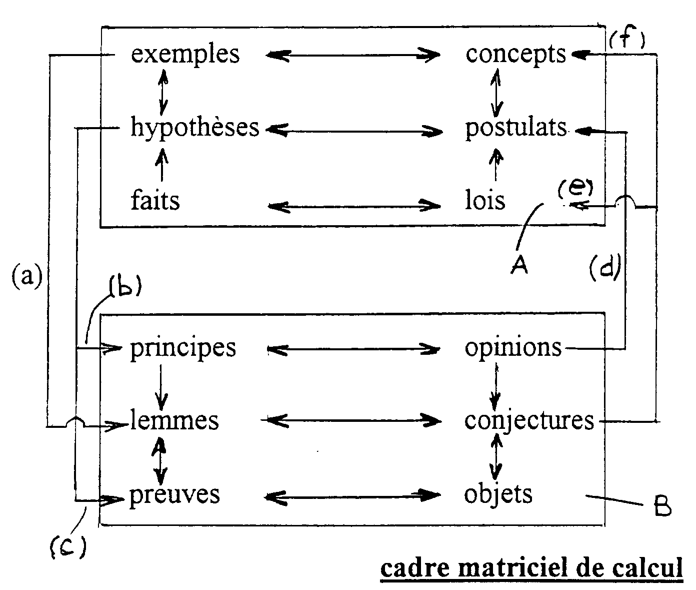

A des fins purement didactiques, commentons à nouveau ce tableau, mais avec un exemple particulièrement simple.
Fait : - Marie est une personne à considérer.
Hypothèse :- Marie vole.
   tirée du fait

Exemple, tiré de l'hypothèse pour donner à celle-ci une valeur dans un contexte particulier :
- Marie vole dans un avion.
   Lemme :- dans un avion, les passagers sont munis de billet.
      tiré de l'exemple (a)
   Principe, tiré de l'hypothèse et qui est l'inverse de l'hypothèse (b):
      - pour voler, il faut un avion.
   Lemme : dans un avion, on vole.
      tiré du principe
   Opinion :- elle vise à attribuer une valeur au principe ;
      - l'opinion peut refuser le principe ;
      - l'opinion peut l'admettre et le lemme correspondant avec.
   Postulat :- il est tiré du principe admis (d).
   Concept : - il est tiré du postulat.

Une hypothèse est mise en relation avec une preuve.

Hypothèse nouvelle : -Marie vole au-dessus du stade.

Cette hypothèse peut engendrer une contradiction et il faut donc vérifier si elle peut être prouvée (c). Comme elle viole la nécessité du lemme, on introduit une conjecture, c'est-à-dire un théorème à démontrer.

Conjecture : - on vole sans avion, si on court vite.

On peut réfuter la conjecture et dans ce cas, on ne change rien au cadre, au système, à l'ontologie.

Si on rejette la réfutation, il faut modifier l'ontologie, la loi et le concept.

Loi : elle est tirée de la conjecture acceptée (e).

Concept : il est aussi tiré de la conjecture acceptée (f).

Les faits, hypothèses et exemples, d'une part, et les lois, postulats et concepts, d'autre part, deux groupes de termes tirés entre eux par des adéquations, forment une base - ou classification - de connaissances, constituant une première sous-matrice A du cadre de calcul.

Le procédé de l'invention vise à faire évoluer cette base A de façon interactive, ou réflexive, à l'aide des termes informatiques de calcul de la deuxième sous-matrice B du cadre de calcul formée de deux autres groupes de termes également liés entre eux par des adéquations et comprenant respectivement les principes, les lemmes et les preuves, d'une part, et les opinions, les conjectures et les objets, d'autre part.

La sous-matrice de connaissances de départ est élaborée à l'aide du logiciel d'apprentissage.

Les deux sous-matrices interagissent l'une sur l'autre à l'aide des moyens informatiques de calcul comprenant le logiciel de propagation de contraintes booléennes de recherche d'ambiguïtés et le logiciel de gestion de hiérarchie de termes.

Chacun des douze éléments du cadre matriciel ci-dessus représente un élément structurel ou catégorie mathématique constituant un fragment cohérent d'un langage de programmation fonctionnel, qui se formalise comme une monade.

Les programmeurs connaissent bien le langage de programmation appelé JAVA, de la société SUN Microsystèmes, qui a la particularité de pouvoir s'appliquer à tous les systèmes d'exploitation. Naturellement, le procédé de conception interactive de l'invention doit pouvoir mettre en oeuvre des langages indépendants des systèmes d'exploitation comme JAVA.

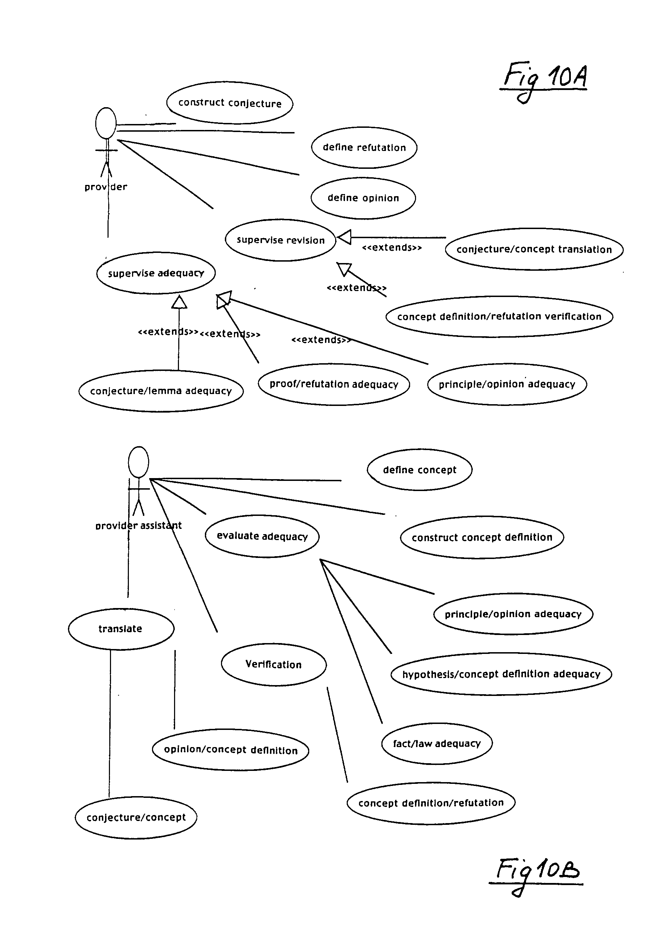

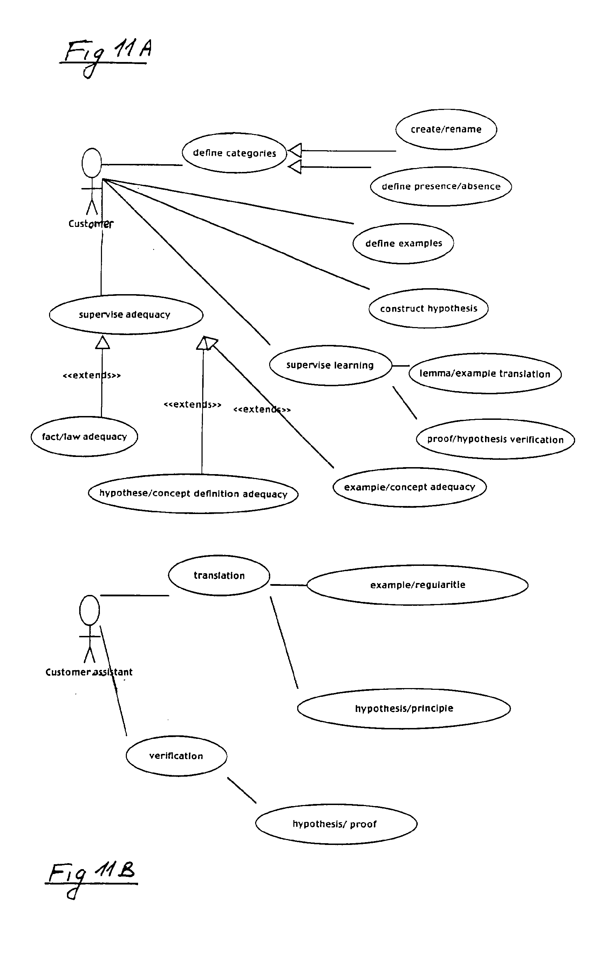

Pour définir les composants logiciels d'un langage comme JAVA, on procède, de façon classique, à une étape préalable de spécification du programme, comme illustré par les planches des figures 10 et 11 en annexe.

Pour cela, on peut utiliser un langage universel comme le langage UML. Et c'est précisément avec les éléments du cadre matriciel de l'invention qu'on va élaborer les éléments de spécification libres d'ambiguïtés, éléments qui constituent donc des fragments du langage de spécification du programme.

En référence à l'exemple du restaurateur (fournisseur de prestations) et de son client, les arbres des figures 10A et 10B sont relatifs aux spécifications relatives au restaurateur et aux moyens informatiques le concernant, les arbres des figures 11A et 11B, au client et aux moyens informatiques le concernant.

On retrouve bien sur tous ces arbres, les éléments du cadre matriciel de l'invention.

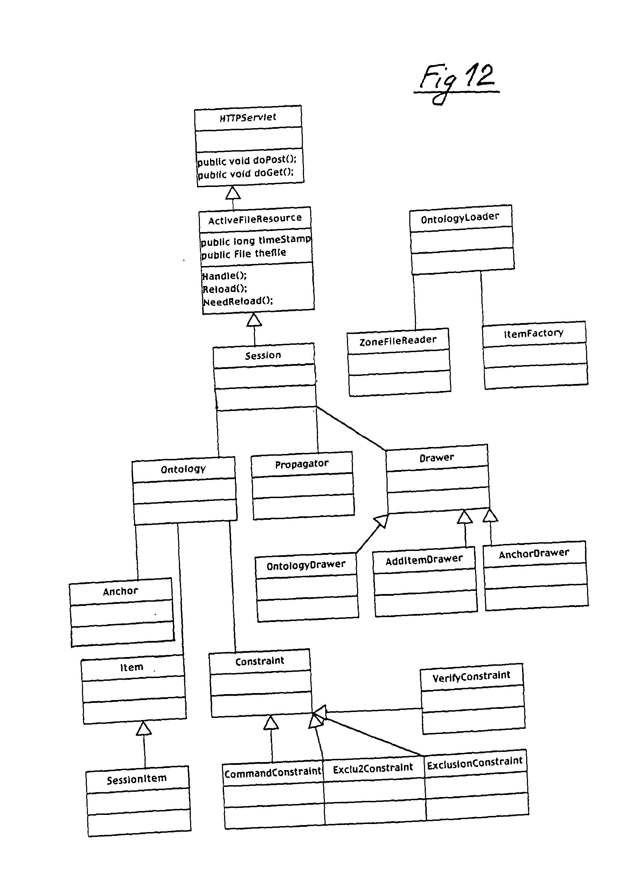

Après l'étape de spécification du programme à l'aide des catégories du cadre matriciel, on passe, toujours de façon classique, à l'étape d'élaboration du programme des classes de la figure 12, au cours de laquelle on définit le déroulement du programme, son mode opératoire et finalement l'interactivité entre les opérateurs ou, s'il n'y en a qu'un, la réflexivité interactive, notamment à l'aide de l'affichage des grilles-écrans.

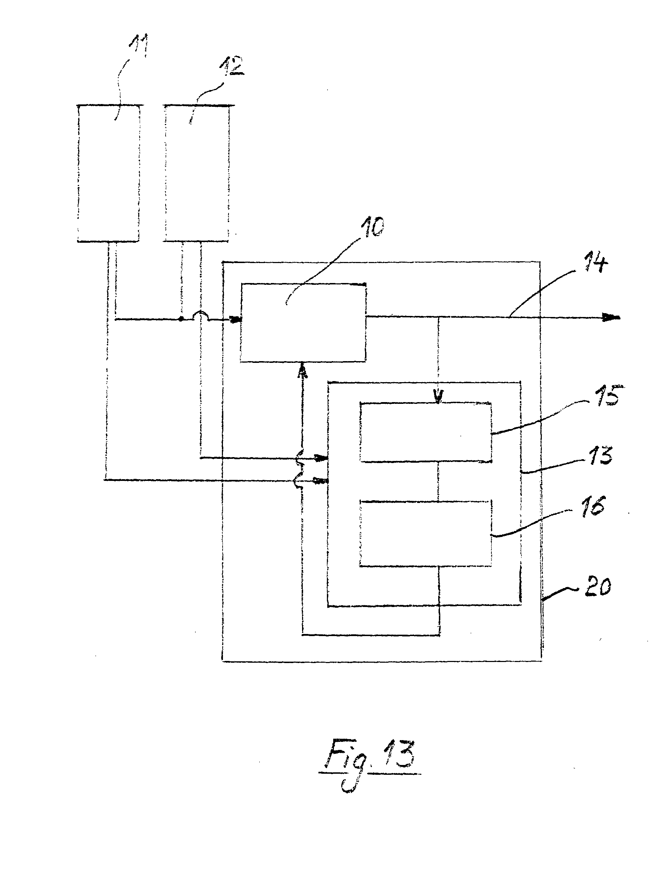

Ainsi, et en référence à la boucle de la figure 13, on a décrit un procédé et un système informatiques de conception interactive (ou réflexive) d'accords qui, à partir d'une base de connaissances 10 fournie par au moins un opérateur 11, 12, sur au moins un ordinateur 20, et comportant des incohérences, contradictions ou ambiguïtés, les éliminent par des moyens 13 de programmation fonctionnelle comprenant les catégories mathématiques du cadre matriciel défini par le ou les mêmes opérateurs 11, 12 qu'on applique à des éléments, fragments de langage de programmation classiques agencés pour spécifier les composantes d'un code source de programmation pour obtenir une base 14 libre d'ambiguïtés et qui est un accord.

En d'autres termes, l'invention réalise un servo-mécanisme informatique défini par un ou des opérateurs agencés pour dégager les ambiguïtés 16 d'une base de connaissances proposée par ces mêmes opérateurs.

Ce mécanisme informatique comporte un logiciel d'apprentissage de règles logiques à partir d'exemples exprimant des objets structurés.

Pour reprendre l'exemple de la composition d'un menu dans un restaurant, l'aspect remarquable de l'invention réside dans le fait que le client traite la carte du restaurateur comme un programmeur traite son système de spécification de programme.

On a vu plus haut que le système informatique nécessaire à la mise en oeuvre du procédé comprend (15):
- un propagateur de contraintes,
- un gestionnaire de hiérarchie de termes,
- un générateur de documents.

### Logiciel de propagation de contraintes booléennes pour recherche des contradictions

Les informaticiens connaissent bien un tel logiciel. Donnons donc seulement un exemple pour illustrer ce logiciel de propagation.
Soit + le symbole de la présence.
Soit → le symbole de l'induction.
A⁺ → B⁺ signifie que si A est présent, B l'est aussi.
Soit ⇒ le symbole de la déduction. 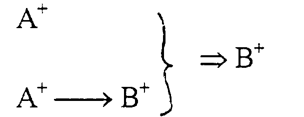 est un logiciel de propagation. Ainsi, si A est présent et si la présence de A induit celle de B, on en déduit que B est présent.

### Logiciel de gestion de hiérarchie de termes

C'est un logiciel, également connu des informaticiens, qui gère des hiérarchies et qui, ici, s'assure qu'il n'y a pas de contradictions générées par les propagations de contraintes.

Soit - le symbole de l'absence.

Gérer les contradictions dans les hiérarchies signifie, par exemple, s'assurer que les deux symboles + ou - ne s'affichent pas simultanément en association avec un même terme.

Quant à la génération de documents, tout le monde sait de quoi il s'agit.

Ainsi, et plus concrètement, et toujours en référence à la figure 13, le système informatique de l'invention comporte un ordinateur 20 pour un seul opérateur, s'il s'agit d'une conception réflexive, ou pour deux opérateurs 11, 12 s'il s'agit d'une conception interactive.

Dans le cas d'une conception interactive, le système peut comporter, ainsi deux ordinateurs similaires, respectivement pour les deux opérateurs, reliés entre eux par un réseau informatique de transmission de données, par exemple le réseau Internet.

Chaque ordinateur est équipé, de façon classique, d'un clavier de saisie, d'un écran de visualisation et d'affichage, d'une imprimante et des logiciels informatiques décrits ci-dessus, en l'espèce le propagateur de contraintes, le gestionnaire de hiérarchie de termes, le générateur de documents (13).

## Revendications

1. Procédé de conception interactive d'une base de connaissances libre d'ambiguïtés, dans lequel on crée deux sous-ensembles matriciels de connaissances (A) et de calcul (B), respectivement, pour former un cadre matriciel de calcul, de lignes et de colonnes d'éléments structurels, on lie les éléments structurels en ligne des deux sous-ensembles matriciels par des adéquations et, pour faire évoluer le sous-ensemble matriciel de connaissances et le rendre libre d'ambiguïté, on déduit de façon interactive des éléments d'une colonne d'un (B ;A) des sous-ensembles matriciels d'éléments de la même colonne de l'autre (A ;B) des sous-ensembles matriciels, les éléments du sous-ensemble matriciel (A ; B) desquels on déduit les éléments de l'autre sous-ensemble matriciel (B ;A) étant liés à des éléments déduits de ceux dudit autre sous-ensemble matriciel (B ;A).

2. Procédé selon la revendication 1, dans lequel on forme le sous-ensemble matriciel de connaissances (A) à partir de faits liés à des lois.

3. Procédé selon la revendication 2, dans lequel, des faits, on tire des hypothèses et des exemples qu'on lie dans le sous-ensemble de connaissances à des postulats et des concepts, respectivement.

4. Procédé selon l'une des revendications 1 à 3, dans lequel des exemples du sous-ensemble de connaissances, on tire des lemmes du sous-ensemble de calcul.

5. Procédé selon l'une des revendications 1 à 4, dans lequel, des hypothèses du sous-ensemble de connaissances, on tire des principes du sous-ensemble de calcul.

6. Procédé selon la revendication 4, dans lequel des principes, on tire des lemmes et des preuves qu'on lie, dans le sous-ensemble de calcul, à des conjectures et des objets, respectivement.

7. Procédé selon l'une des revendications 3 à 6, dans lequel des hypothèses du sous-ensemble de connaissances, on tire des preuves du sous-ensemble de calcul.

8. Procédé selon l'une des revendications 5 à 7, dans lequel dans le sous-ensemble de calcul, on lie les principes à des opinions desquelles on tire des postulats du sous-ensemble de connaissances.

9. Procédé selon l'une des revendications 6 à 8, dans lequel des conjectures du sous-ensemble de calcul, on tire des lois et des concepts du sous-ensemble de connaissances.

10. Procédé selon l'une des revendications 1 à 9, dans lequel on considère, comme éléments structurels du cadre de calcul, des catégories mathématiques constituant des fragments cohérents d'un langage de programmation fonctionnel.

11. Procédé selon la revendication 10, dans lequel on utilise les éléments structurels du cadre matriciel de calcul comme éléments de spécification d'un programme non propriétaire de calcul de déduction mutuelle de ces éléments structurels.

12. Procédé selon la revendication 11, dans lequel on utilise le langage UML pour élaborer les éléments de spécification dans le langage de programmation JAVA.

13. Procédé de conception interactive d'une base de connaissances libre d'ambiguïtés, dans lequel on crée deux sous-ensembles de connaissances (A) et de calcul (B), respectivement, et on fait évoluer de façon interactive le sous-ensemble de connaissances à l'aide du sous-ensemble de calcul pour en éliminer les ambiguïtés.

14. Procédé selon la revendication 13, dans lequel on élabore un sous-ensemble de connaissances (A) à l'aide d'un logiciel d'apprentissage.

15. Procédé selon l'une des revendications 13 et 14, dans lequel on fait interagir les deux sous-ensembles de connaissances (A) et de calcul (B) à l'aide de moyens informatiques comprenant un logiciel de propagation de contraintes booléennes de recherche d'ambiguïtés et d'un logiciel de gestion de hiérarchie de termes.

16. Procédé de conception interactive d'une base de connaissances libre d'ambiguïtés, dans lequel on saisit une base de connaissances (A) comportant des ambiguïtés, on saisit un ensemble (B) de catégories mathématiques sous forme de fragments cohérents d'un langage de programmation fonctionnel, on fait interagir la base (10) et l'ensemble (B) pour spécifier les composantes d'un code source de programmation, extraire les ambiguïtés de la base et obtenir une base (14) libre d'ambiguïtés.

17. Système informatique de conception interactive d'une base de connaissances libre d'ambiguïtés, comprenant au moins un ordinateur, des moyens logiciels informatiques de saisie d'une base de connaissances (10), des moyens logiciels informatiques de calcul (13) agencés pour, sous la commande d'au moins un opérateur, coopérer avec les moyens logiciels de saisie et éliminer les ambiguïtés de la base de connaissances.

18. Système informatique selon la revendication 17, dans lequel les moyens logiciels informatiques comprennent des fragments cohérents d'un langage de programmation fonctionnel.

19. Système informatique selon l'une des revendications 17 et 18, comprenant deux ordinateurs.

20. Système informatique selon la revendication 19, dans lequel les deux ordinateurs sont reliés entre eux par un réseau informatique de transmission de données.

21. Outil informatique intermédiaire pour la mise en oeuvre du système informatique de conception interactive d'une base de connaissances libre d'ambiguïtés comprenant le produit de logiciel informatique contenant un cadre matriciel de calcul avec un sous-ensemble matriciel de connaissances (A) et un sous-ensemble matriciel de calcul (B) agencés pour interagir entre eux et tous deux à entrée de commande d'interactivité.

22. Outil informatique selon la revendication 21, dans lequel le produit de logiciel informatique comporte des fragments cohérents d'un langage de programmation fonctionnel de spécification d'un programme.
